# EUROPÄISCHE PATENTSCHRIFT

(11) **EP 2 836 558 B1**
(45) Veröffentlichungstag und Bekanntmachung des Hinweises auf die Patenterteilung: **18.05.2016**
(21) Anmeldenummer: 13719366.0
(22) Anmeldetag: 15.04.2013
(51) Int. Cl.: C08L 89/06, C08L 97/02, B27N 3/04, C08K 3/00, C08K 3/22, C08K 3/30, C08J 5/04

(54) **ABBAUBARES MATERIAL AUS BIOLOGISCHEN KOMPONENTEN**
DEGRADABLE MATERIAL FROM BIOLOGICAL COMPONENTS
MATERIAUX DEGRADABLES SUR BASE DE COMPOSANTS BIOLOGIQUES

(30) Priorität: 13.04.2012 CH 509122012
(43) Veröffentlichungstag der Anmeldung: 18.02.2015
(73) Patentinhaber: Fluid Solids AG, 8004 Zürich (CH)
(72) Erfinder: KARRER, Beat, CH-8004 Zürich (CH); SCHWENDEMANN, Daniel, 88630 Pfullendorf (DE); MÜLLER, Bettina, CH-8645 Jona (CH); GSCHWEND, Florian, CH-8640 Rapperswil-Jona (CH)
(74) Vertreter: Kessler, Stephan
(86) Internationale Anmeldenummer: PCT/CH2013/000060
(87) Internationale Veröffentlichungsnummer: WO 2013/152448

(56) Entgegenhaltungen:
- WO-A1-2009/079579
- WO-A2-2004/029135
- DE-C- 334 183
- DE-C- 461 775

## Beschreibung

### Technisches Gebiet

Die Erfindung betrifft ein abbaubares Material aus biologischen Komponenten sowie Verfahren zur Herstellung eines Formteils aus einem abbaubaren Material.

### Stand der Technik

US 7,387,756 (Guilbert et al.) beschreibt ein Verfahren zur Herstellung eines Materials auf Basis von natürlichen Fasern. Die Naturfasern werden mit einem natürlichen Proteinbinder in Pulverform vermischt, wobei die Naturfasern einen Feuchtigkeitsgehalt von 1-15% aufweisen. Der Feuchtigkeitsgehalt wird auf 6-24% eingestellt und die Mischung wird anschliessend durch einen Heisspressvorgang geformt.

US 6,284,838 (Novamont SpA) offenbart eine biologisch abbaubare Zusammensetzung aus Lignin oder einem ligninhaltigen Material und einem Protein. Die Zusammensetzung kann auch weitere Additive umfassen. Das Lignin oder ligninhaltige Material wird mit dem Protein zusammen erhitzt und eingeschmolzen. Als ligninhaltiges Material können auch feine Holzpartikel eingesetzt werden. Als bevorzugtes Protein wird pflanzliches oder tierisches Casein oder Gelatine eingesetzt.

US 5,360,586 (Wyatt Danny) beschreibt ein Verfahren zur Herstellung eines abbaubaren Formteils aus einem zellulosehaltigen Material. Das zellulosehaltige Material umfasst weniger als 50% an Wasser und wird mit einem Bindemittel und einem Schäumungsmittel vermischt. Die Mischung wird in einen Extruder gefüllt, mit Wasser vermischt und anschliessend zu einem Formteil extrudiert.

DE 461 775 (Hans Brandt) offenbart eine Holzersatzmasse, welche billiger und leichter als Holz ist und einen höheren Flammpunkt sowie eine höhere Wasserbeständigkeit aufweist. Zur Herstellung der Masse wird Papier in Kalilauge gekocht und anschliessend mit Gerbsäure und Natriumhydroxid vermischt. Die Masse wird getrocknet und pulverisiert. Anschliessend wird das Pulver mit Zement, Natriumcarbonat, Talk und Antimonchlorid vermengt sowie eine Lösung von Lederleim in Schwefelwasserstoff unter Rühren zugemengt. Die entstandene Masse kann auf Bleche ausgerollt oder zu Formen verpresst werden.

DE 334 183 (Dr. Kukula) beschreibt eine Holzersatzmasse zur Herstellung von Bleistiftfassungen. Die Masse wird aus einem Gemenge an Holzfasern mit Mineralstoffen und Wasser hergestellt. Als Bindemittel wird dem Gemenge Leim und Dextrin oder Pflanzenschleim zugesetzt. Die Masse wird ohne Erwärmen unter mässigem Druck in geeignete Formen gepresst. Als Beispiel wird erwähnt, dass 4 bis 5 Gewichtsteile Holzschliff oder Sägespäne, welchen eine geringe Menge an Zellstoff zugesetzt werden kann, mit einem Gewichtsteil Asbest, Kieselgur oder Talk sowie einem Gewichtsteil Knochenleim oder Gelatine und einem Gewichtsteil Pflanzenschleim oder Dextrin unter Zusatz einer möglichst geringen Menge an Wasser vermischt werden können.

WO 2009/079579 (E2E Materials) beschreibt bioabbaubare, formaldehydfreie Wellpappe, insbesondere Wellpappe mit einem Klebstoff aus Soja. Die Wellpappe besteht aus einer ersten Platte, welche aus einem Sojaharz hergestellt wurde, sowie weiteren Platten aus Pflanzenfasermaterial. Die erste Platte wird mit einem Wellenelement verbunden. Die Pflanzenfasern können Flachs-, Hanf-, Chinagras-, Sisal-, Jute-, Kapokbaum-, Bananen-, Ananas- oder Kenaffasern umfassen. Die Fasern können als gewobenes oder ungewobenes Textil vorliegen. Bevorzugt liegen die Fasern jedoch als ungewobene Matten vor, welche durch ein natürliches Bindemittel, wie z. B. Polylactid zusammengehalten werden. Das Wellenelement wird vorzugsweise aus gepufften Körnern hergestellt, insbesondere aus Weizen-, Reis-oder Maiskörnern. In einem ersten Schritt eines Herstellungsverfahrens wird eine erste Anzahl an Platten aus Pflanzenfasern mit einem Sojaharz imprägniert, angetrocknet, zu einer Pressplatte zusammengepresst und anschliessend mit einem Wellenelement verklebt. Zum Schluss wird auf das Wellenelement eine zweite Pressplatte aufgeklebt. Das Sojaharz kann zusätzlich ein Polysaccharid enthalten, insbesondere Agar, Gellan oder eine Mischung davon.

WO 2004/029135 (K.U. Leuven) offenbart ein Biopolymer auf der Basis von Gluten sowie ein Kompositmaterial aus Fasern, welche mit Gluten beschichtet sind. Das Material wird durch Mischen von Gluten mit Molekülen, welche mehrere Thiol-Gruppen enthalten, hergestellt. Das Gluten wird hierzu zusammen mit den Molekülen in einer bevorzugt wässrigen Lösung dispergiert. Ferner können auch Fasern mit Gluten beschichtet und zu einem Kompositmaterial verarbeitet werden. Die Fasern können sowohl synthetisch wie auch natürlich sein. In einer besonderen Ausführungsform wird um die Fasern herum ein Glutennetzwerk gebildet. Die so erhaltene Fasermatrix kann anschliessend in einem Druckgussverfahren gepresst werden. Als Fasern können dabei einerseits Zellulosefasern oder auch Halme, Schoten, Hülsen oder Früchte verwendet werden.

Nachteilig an den vorbekannten Materialien ist, dass aus diesen Materialien hergestellte Formteile zunächst nur eine geringe mechanische Stabilität aufweisen, da deren Aushärten, insbesondere bei Vorliegen von Proteinklebern, einige Zeit in Anspruch nimmt. Ferner müssen diese Materialien im Abfall entsorgt werden, da nicht alle verwendeten Materialien abbaubar und umweltverträglich sind.

### Darstellung der Erfindung

Aufgabe der Erfindung ist es, ein dem eingangs genannten technischen Gebiet zugehörendes Material zu schaffen, welches im Vergleich zu den aus dem Stand der Technik bekannten Materialen schneller aushärtet, damit ein daraus hergestelltes Formteil möglichst schnell eine gute mechanische Stabilität aufweist, welches vollständig aufgelöst werden kann und abbaubar ist.

Die Lösung der Aufgabe ist durch die Merkmale des Anspruchs 1 definiert. Gemäss der Erfindung umfasst das Material von 10 bis 60 Gewichtsprozent eines Proteinklebers aus wenigstens einem Protein. Ferner umfasst das abbaubare Material von 2 bis 50 Gewichtsprozent an Naturfasern, von 2 bis 15 Gewichtsprozent mindestens eines hygroskopischen Minerals ausgewählt aus Calciumsulfat, Calciumoxid, Magnesiumsulfat, Zeolit, oder einer Mischung davon, sowie von 10 bis 55 Gewichtsprozent an Wasser. Zudem kann eine Additivkomponente in einer Menge von 0 bis 50 Gewichtsprozent im Material vorhanden sein.

Das erfindungsgemässe Material ist "abbaubar". Im Sinne der vorliegenden Anmeldung wird darunter verstanden, dass das Material über biologische Prozesse vollständig aufgelöst werden kann.

Als "Proteinkleber" im Sinne der Anmeldung werden Proteinlösungen verstanden, welche über einen Aushärteprozess ein dreidimensionales Netzwerk ausbilden können. Dieser Aushärteprozess ist vorzugsweise reversibel, insbesondere durch Zugabe von Wasser und zusätzlicher Wärmeeinwirkung. Vorzugsweise besteht ein Proteinkleber aus einem einzigen Protein oder einer einzigen Proteinklasse. Alternativ kann der Proteinkleber auch aus mehreren unterschiedlichen Proteinen oder aus Proteinen unterschiedlicher Poteinklassen bestehen.

Das Material umfasst von 10 bis 60 Gewichtsprozent, bevorzugt von 30 bis 50 Gewichtsprozent, besonders bevorzugt von 40 bis 45 Gewichtsprotzen an Proteinkleber.

Das Material umfasst ferner von 2 bis 50 Gewichtsprozent, vorzugsweise von 5 bis 35 Gewichtsprozent, besonders bevorzugt von 7 bis 20 Gewichtsprozent an Naturfasern.

Weiter sind von 2 bis 15 Gewichtsprozent, vorzugsweise von 5 bis 12 Gewichtsprozent, besonders bevorzugt von 7 bis 10 Gewichtsprozent mindestens eines hygroskopischen Minerals ausgewählt aus Calciumsulfat, Calciumoxid, Magnesiumsulfat, Zeolit, oder einer Mischung davon, sowie von 10 bis 55 Gewichtsprozent, bevorzugt von 20 bis 50 Gewichtsprozent, besonders bevorzugt von 35 bis 45 Gewichtsprozent an Wasser im abbaubaren Material vorhanden. Das hygroskopische Mineral liegt besonders bevorzugt in Pulverform im Material vor.

Zudem kann das Material eine Additivkomponente in einer Menge von 0 bis 50 Gewichtsprozent, bevorzugt von 10 bis 40 Gewichtsprozent, besonders bevorzugt von 20 bis 30 Gewichtsprozent umfassen. Die Additivkomponente muss nicht zwingend im Material vorhanden sein. Das erfindungsgemässe Material löst die weiter oben erwähnte technische Aufgabe auch ohne Additivkomponente.

Durch die Zugabe eines hygroskopischen Minerals ausgewählt aus Calciumsulfat, Calciumoxid, Magnesiumsulfat, Zeolit, oder einer Mischung davon, lagert sich das im Material vorhandene Wasser als Kristallwasser am hygroskopischen Mineral an, wodurch die Aushärtegeschwindigkeit des Proteinklebers erhöht wird. Ferner kann das hygroskopische Mineral zusätzlich mit dem Wasser abbinden, was dazu führt, dass ein aus dem Material hergestelltes Formteil relativ schnell eine gute mechanische Stabilität aufweist, selbst vor einer vollständigen Aushärtung des Proteinklebers.

Ein wesentlicher Vorteil des erfindungsgemässen Materials ist, dass sich dieses in heissem Wasser vollständig auflösen lässt. Aufgrund der Zusammensetzung des Materials aus reinen Naturstoffen kann die resultierende wässerige Lösung problemlos als Abwasser entsorgt oder zur Düngung von Pflanzen verwendet werden. Alternativ kann ein aus dem Material hergestelltes Formteil zur Entsorgung verbrannt werden, wobei aufgrund der Verwendung nachwachsender Rohstoffe eine nahezu neutrale CO₂ Bilanz resultiert. Ferner kann das erfindungsgemässe Material nach Gebrauch auch als Kompost verwertet werden. Das abbaubare Material ist zunächst flüssig und lässt sich daher sehr einfach zu Formteilen verarbeiten, beispielsweise durch Pressen oder durch Extrusion. Ausserdem wurde festgestellt, dass sich das erfindungsgemässe Material auch als Substrat für einen dreidimensionalen Drucker einsetzen lässt.

Als hygroskopisches Mineral wird mindestens eines der folgenden Stoffe verwendet: Calciumsulfat, Calciumoxid, Magnesiumsulfat, Zeolith, oder eine Mischung davon.

Das Calciumsulfat wird insbesondere bevorzugt in der Form von handelsüblichem Gipspulver verwendet, während Lithium-, Natrium- und Kaliumsilikate vorzugsweise in der Form von sog. amorphem "Wasserglas" verwendet wird. Als Zeolith werden insbesondere bevorzugt sog. Molekularsiebe, vorzugsweise mit einer Porengrösse von 3 Ångström verwendet.

Vorzugsweise beinhaltet der Proteinkleber Glutin, Kollagen, Alginate, Albumin, Gelatine, Chondrin, Agar-Agar, Xanthan oder eine Mischung davon. Proteinkleber aus Glutin lassen sich relativ leicht aus Knochen, Knorpeln oder Häuten von Tieren herstellen. Als Kollagenkleber kann Gelatine verwendet werden, welche in grossen Mengen aus der Nahrungsmittelindustrie erhältlich ist. Alginate können vor allem als pulverförmige Salze der Alginsäure, wie z. B. Natriumalginat, Kaliumalginat, Ammoniumalginat oder Calciumalginat, im erfindungsgemässen Material eingesetzt werden.

Ferner können zusätzlich zum Proteinkleber auch Ligninsulfonat, Lignin, Glukose oder Dextrin als weitere Bindemittel verwendet werden.

Alternativ sind auch weitere Proteinkleber in einem erfindungsgemässen Material einsetzbar, wie z. B. Fibrinkleber oder die Klebeproteine aus der Miesmuschel. Diese Proteinkleber sind jedoch zurzeit nur in geringen Mengen und nur zu einem hohen Preis erhältlich, weshalb sich diese zur Beimengung in das erfindungsgemässe Material wirtschaftlich nicht lohnen.

Bevorzugt wird als Proteinkleber Knochenleim, Hautleim, Hasenleim oder Fischleim verwendet. Diese Leime sind selbst in grossen Mengen leicht erhältlich und zudem preiswert. Ausserdem ist deren Anwendung aufgrund ihrer relativ niedrigen Schmelztemperatur einfach, da zur Herstellung und Applikation das Material nicht auf eine hohe Temperatur erhitzt werden muss.

Die Naturfasern beinhalten mit Vorteil Holzfasern, Getreidefasern, Nussschalenfasern, Gräserfasern, Maisschrot, Cellulosefasern, Celluloseflocken oder eine Mischung davon.

Derartige Naturfasern fallen in der Landwirtschaft, der Forstwirtschaft sowie der Zellstoffindustrie als Abfallprodukte an. Besonders bevorzugt werden als Naturfasern Nadelholzfasern eingesetzt. Die Naturfasern können je nach dem durch das Material herzustellende Formteil unterschiedliche Grössen aufweisen. Bevorzugt werden Naturfasern mit einer Länge von 0.5 mm bis 50 mm eingesetzt. Alternativ können die Naturfasern jedoch auch in Pulverform verwendet werden, beispielsweise als Pulver mit einer durchschnittlichen Partikelgrösse von 0.01 mm bis 0.5 mm. Ein derartiges Pulver kann z. B. durch Zermahlen von Naturfasern hergestellt werden. Die Naturfasern verleihen dem ausgehärteten Material die nötige mechanische Festigkeit um auch grössere Lasten zu tragen, beispielsweise wenn daraus ein Stuhl oder ein Tisch hergestellt wird.

Die Fasern können in ihrem natürlichen Zustand oder alternativ auch nach einer chemischen Modifikation verwendet werden. Beispielsweise können Cellulosefasern durch Methylierung, Sulfonierung, Nitrierung, Acetylierung, etc. chemisch verändert werden, bevor diese für das erfindungsgemässe Material eingesetzt werden.

Grundsätzlich lassen sich für das erfindungsgemässe Material alle Arten von pflanzlichen Fasern verwenden, so z. B. auch Bambusfasern, Hanffasern, Reisschalenfasern oder ähnliche.

Als hygroskopisches Mineral wird vorzugsweise Calciumsulfat, Magnesiumsulfat oder eine Mischung davon verwendet. Besonders bevorzugt wird das hygroskopische Mineral in Form eines Pulvers verwendet. Als Calciumsulfat wird vorzugsweise handelsübliches Gipspulver eingesetzt. Sowohl Calciumsulfat als auch Magnesiumsulfat sind sehr hygroskopisch und binden das Wasser des Materials als Kristallwasser. Dies reduziert die im Material vorhandene Menge an ungebundenem Wasser, wodurch das Aushärten des Proteinklebers beschleunigt wird. Die Verwendung von Calciumsulfat erhöht die Stabilität eines aus dem Material hergestellten Formteils zusätzlich, da Calciumsulfat mit dem Wasser des Materials zusätzlich abbindet und dadurch eine mechanisch stabile Struktur bildet.

Die vorteilhafte Wirkung des hygroskopischen Minerals liegt darin, dass das im Material vorhandene freie Wasser gebunden wird. Daher sollte für einen Fachmann klar sein, dass möglichst wasserfreie Formen des hygroskopischen Minerals zur Herstellung des Materials eingesetzt werden sollten. Vorzugsweise sollten demnach das Calciumsulfat als Anhydrit sowie wasserfreies Magnesiumsulfat oder Magnesiumsulfat-Monohydrat verwendet werden.

Ein weiterer Vorteil des hygroskopischen Minerals ist die Exothermie der Kristallwassereinlagerung. Durch die freigesetzte Wärmeenergie wird das Aushärten des Proteinklebers beschleunigt, was zu einer schnelleren Verfestigung des Materials führt.

Die Additivkomponente umfasst vorzugsweise von 1 bis 10 Gewichtsprozent, bevorzugt von 2 bis 8 Gewichtsprozent mindestens eines biologisch abbaubaren Weichmachers. Der biologisch abbaubare Weichmacher ist vorzugsweise Glycerin, Harnstoff, Zitronensäuretriethylester, Sorbit, Xanthan oder ein Alkylcitrat. Durch die Beigabe eines Weichmachers kann die Sprödigkeit des Materials verändert werden. So kann beispielsweise die Elastizität von aus dem Material hergestellten Formteilen modifiziert werden.

Alternativ können auch konventionelle Weichmacher, wie sie z. B. aus der Polymerindustrie bekannt sind, eingesetzt werden. Allerdings sind solche Weichmacher ökologisch nicht unbedenklich.

Bevorzugt umfasst die Additivkomponente von 0.1 bis 10 Gewichtsprozent, besonders bevorzugt von 3 bis 6 Gewichtsprozent mindestens eines biologisch abbaubaren Stabilisators. Der abbaubare Stabilisator ist bevorzugt Ligninsulfonat, Leinsamenöl oder Leinölfirnis. Durch Zugabe des Stabilisators können die Fliesseigenschaften des Materials verbessert werden. Ligninsulfonat reagiert mit den Proteinen des Proteinklebers, während Leinsamenöl und Leinölfirnis beide durch Oxidation aushärten. Beide Reaktionen helfen dem Material zusätzliche mechanische Stabilität zu verleihen. Zudem schützen beide Reaktionen das Material vor Feuchtigkeit, so dass eine Beschädigung oder ein Aufweichen des Materials bei zufälligem Flüssigkeitskontakt verhindert werden kann.

Die Additivkomponente beinhaltet vorzugsweise zusätzlich von 0.1 bis 10 Gewichtsprozent mindestens eines Mittels zur Erhöhung der Wasserbeständigkeit. Besonders bevorzugt wird als Mittel zur Erhöhung der Wasserbeständigkeit Tannin, Corilagin, Ganidin, Kalialaun, Harnstoff, Kasein, Ferulasäure, Gossypol, Sulfonsäure, ein Enzym wie Lysyloxidase, Transglutaminase, Laccase oder eine Mischung davon im Material verwendet. Durch den Einsatz eines solchen Mittels werden die im Material vorhandenen Proteinkleber zusätzlich vernetzt, womit sich die Wasserbeständigkeit des ausgehärteten Materials erhöht. Die zusätzliche Vernetzung ergibt sich aus einer chemischen Denaturierung der im Proteinkleber vorhandenen Proteine oder durch eine enzymatisch katalysierte Vernetzungsreaktion.

Alternativ können auch andere Mittel zur Erhöhung der Wasserbeständigkeit verwendet werden, wie z. B. Aluminiumsulfat.

Bevorzugt umfasst das abbaubare Material ferner eine hydrophobe Komponente, insbesondere Gummi Arabicum, Mastix, Kolophonium, Sandarak oder eine Mischung davon.

Weiter bevorzugt kann die hydrophobe Komponente auch Vaseline, Terpentinöl, Milch, Casein oder Bienenwachs umfassen.

Durch das hydrophobe Additiv lässt sich die Wasserbeständigkeit des ausgehärteten Materials erhöhen beziehungsweise einstellen. Dadurch lässt sich ein Material herstellen, welches kurzzeitig Wasser ausgesetzt werden kann, ohne Schaden zu nehmen, während das Material trotzdem durch eine längere Beaufschlagung mit Wasser, insbesondere mit heissem Wasser oder Wasserdampf, vollständig aufgelöst werden kann. Dies erlaubt z. B. die Verwendung des Materials zur Herstellung von Tellern oder Schalen, welche abwaschbar sind, oder eines Formteils mit einer Oberfläche, welche feucht gereinigt werden kann.

Alternativ lässt sich die Wasserbeständigkeit eines aus dem Material hergestellten Formteils auch durch Auftragen einer geeigneten, hydrophoben Beschichtung oder durch eine Lackierung erhöhen.

Vorzugsweise beinhaltet die Additivkomponente wenigstens einen natürlichen Farbstoff. Der natürliche Farbstoff ist besonders bevorzugt ein Eisenoxidpigment. Durch die Zugabe eines natürlichen Farbstoffs lassen sich unterschiedlich gefärbte Formteile mit dem erfindungsgemässen Material herstellen, ohne dass dabei die biologische Verträglichkeit des aufgelösten Materials beeinträchtigt wird. Eisenoxidpigmente ermöglichen die Färbung des Materials in Gelb (Eisenoxidgelb; C.I. Pigment Yellow 42), Rot (Eisenoxidrot; C.I. Pigment Red 101) sowie Schwarz (Eisenoxidschwarz; C.I. Pigment Black 11). Zudem verursacht die Verwendung von Eisenoxid als Farbstoff eine schnellere Oxidation des Stabilisators, insbesondere von Leinsamenöl oder Leinölfirnis, wobei ein aus dem erfindungsgemässen Material hergestelltes Formteil noch schneller mechanisch stabil wird.

Nebst Eisenoxidpigmenten können dem Material auch andere natürliche Farbstoffe beigemengt werden, wie z. B. Kupfersulfat, Kupferacetat oder Cochenillerot (C.I. Acid Red 18), je nach gewünschter Farbe.

Ferner liessen sich auch künstliche Farben in das Material einmischen, was je nach Umweltverträglichkeit der Farben dazu führen könnte, dass das aufgelöste Material gesondert entsorgt werden muss.

Die Additivkomponente umfasst ferner vorzugsweise mindestens ein Schäumungsmittel, vorzugsweise Natriumhydrogencarbonat. Durch ein Schäumungsmittel kann die Dichte des Materials durch Einbringen von Gaseinschlüssen, insbesondere von Kohlenstoffdioxid reduziert werden. Je nach Menge an Schäumungsmittel kann die Anzahl der Gaseinschlüsse variiert werden. Eine grosse Anzahl an Gaseinschlüssen erhöht den Schallschutz- bzw. den Wärmeisolationsfaktor des Materials.

Andere bevorzugte Schäumungsmittel sind Natriumcarbonatdecahydrat, Natriumdodecylpoly(oxyethylen)sulfat, Ammoniumcarbonat sowie Kaliumcarbonat.

Alternativ kann das Material auch durch andere Verfahren geschäumt werden, beispielsweise durch Einbringen von Kohlendioxid, Stickstoff oder eines anderen Treibgases unter Druck, z. B. während eines Extrusionsvorganges.

Bevorzugt umfasst die Additivkomponente mindestens ein Biopolymer. Das mindestens eine Biopolymer ist vorzugsweise Lignin, Chitin, Polycaprolacton, thermoplastische Stärke, Celluloseacetat, Polymilchsäure, Casein, Polyhydroxybuttersäure, Polyhydroxyalkanoat, Cellulosehydrat, Celluloseacetat, Celluloseacetobutyrat, Dextrose, Dextrine oder eine Mischung davon. Durch die Zugabe eines Biopolymers lassen sich die Verarbeitungseigenschaften des Materials wie Fliessfähigkeit, Aushärtungsgeschwindigkeit, Topfzeit oder Klebekraft verändern. Zusätzlich können auch die Eigenschaften eines aus dem Material hergestellten Formteils, wie Elastizität, mechanische Festigkeit, Gewicht und chemische Beständigkeit gezielt verändert werden.

Es ist anzumerken, dass einige Biopolymere gleichzeitig eine hydrophobe Wirkung aufweisen können, wie beispielsweise Kolophonium, Mastix oder Sandarak, also auch als hydrophobe Komponente oder als Teil davon eingesetzt werden können.

Bevorzugt umfasst die Additivkomponente einen mineralischen Füllstoff. Dieser Füllstoff umfasst insbesondere Wollastonit, Talkum, Magnesiumoxid oder eine Mischung davon.

Weitere bevorzugte mineralische Füllstoffe umfassen Glimmer, Kaolinit, Montmorillonit, Calciumcarbonat sowie Perlit oder eine Mischung davon.

Der mineralische Füllstoff verhindert ein Schwinden oder ein Verzug eines aus dem Material hergestellten Formteils. Ferner kann durch den mineralischen Füllstoff die Feuerfestigkeit des Materials erhöht werden. Alternativ können auch andere mineralische Füllstoffe eingesetzt werden.

Lithium-, Natrium- oder Kaliumsilikate, welche insbesondere als amorphe Wassergläser eingesetzt werden, sowie kolloidale Siliciumdioxide und Ligninsulfonat weisen den wesentlichen Vorteil auf, dass diese nicht bloss einen vorteilhaften Effekt im erfindungsgemässen Material hervorrufen, sondern sowohl die Modifizierung der rheologischen Eigenschaften, der Wasserbeständigkeit und der Aushärtegeschwindigkeit des Materials hervorrufen.

Ein weiterer Aspekt der vorliegenden Erfindung betrifft ein Verfahren zur Herstellung eines Formteils aus abbaubarem Material. Beim erfindungsgemässen Verfahren wird zunächst ein abbaubares Material gemäss vorangehender Beschreibung in flüssiger Form vorgelegt. Anschliessend wird aus dem abbaubaren Material ein Formteil durch Pressen, insbesondere durch Formpressen, Extrusion, Blasformen, Rotationsformen, Giessen, Spritzgiessen, Vakuumformen oder durch dreidimensionales Drucken hergestellt. Zuletzt wird das Formteil ausgehärtet.

Das erfindungsgemässe abbaubare Material ist aufgrund der verwendeten Komponenten flüssig oder zumindest fliessfähig. Dadurch lässt sich das abbaubare Material in beliebige Formteile formen, welche nach dem Aushärten aufgrund der verwendeten Naturfasern ein holzähnliches Aussehen aufweisen. Ausserdem wurde herausgefunden, dass das erfindungsgemässe abbaubare Material als Substrat für dreidimensionale Drucker verwendet werden kann. Beim dreidimensionalen Drucken nach dem Schmelzschichtungsverfahren (fused deposition modelling) kann das erfindungsgemässe Material in flüssiger Form verwendet werden. Bei der Verwendung in einem Drucker, der nach dem Multi-Jet Modeling (auch Polyjet-Modeling) Verfahren arbeitet, wird das Material vorgängig getrocknet und zu einem Pulver zerkleinert. Das Pulver wird dann in den dreidimensionalen Drucker gegeben, wobei als Bindemittel Wasser verwendet wird.

Vorzugsweise wird das hergestellte Formteil während oder nach dem Aushärten mit UV-Licht bestrahlt. Das UV-Licht weist vorzugsweise eine Wellenlänge von 200 nm bis 280 nm, insbesondere bevorzugt von 253 nm auf.

Durch das Bestrahlen mit UV-Licht können die im Proteinkleber vorhandenen Proteine an der Oberfläche des Formteils denaturiert und untereinander vernetzt werden. Dadurch kann die Wasserbeständigkeit des Formteils zusätzlich erhöht werden.

Als "Aushärten" im Sinne der vorliegenden Anmeldung wird der Prozess verstanden, bei dem sich das abbaubare Material nach der Erzeugung des Formteils durch chemische Prozesse oder durch Abbindeprozesse verfestigt. Das Aushärten beginnt unmittelbar nach dem Extrudieren, Pressen, Formen oder Drucken des Formteils und dauert an, bis das aus dem Material hergestellte Formteil in sich formstabil ist. Beim erfindungsgemässen Material beträgt die Aushärtezeit typischerweise bis zu zwei Tage, wobei je nach Zusammensetzung des Materials auch Aushärtezeiten von unter einer Stunde erreicht werden können.

Bevorzugt wird das ausgehärtete Formteil zusätzlich getrocknet bis der Wassergehalt des ausgehärteten Materials unter 1 Gewichtsprozent liegt. Insbesondere bevorzugt wird das Formteil zusätzlich getrocknet, bis der Wassergehalt unter 0.2 Gewichtsprozent liegt.

Es wurde gefunden, dass durch den zusätzlichen Trocknungsschritt die Wasserfestigkeit des ausgehärteten Materials zusätzlich erhöht werden kann. Ohne an eine Theorie gebunden werden zu wollen, beruht dieser Effekt wahrscheinlich darauf, dass sich durch eine Reduktion des Wassergehalts auf unter 1 Gewichtsprozent sich weitere intermolekulare Amidbindungen der im Proteinkleber vorhandenen Proteine ausbilden, womit der Vernetzungsgrand der Proteine zusätzlich erhöht werden kann.

Ein zusätzlicher Aspekt der vorliegenden Erfindung betrifft ein Verfahren zum Einbringen einer dreidimensionalen Form in eine Giessmasse, vorzugsweise in Beton. Dabei wird vor dem Ausgiessen der Giessmasse ein Negativabdruck der dreidimensionalen Form aus dem abbaubaren Material auf eine Innenwand einer Gussform oder Schalung aufgebracht. Besonders bevorzugt wird der Negativabdruck durch dreidimensionales Drucken auf die Innenwand der Gussform oder Schalung aufgebracht. Nach dem Giessen und Aushärten der Masse wird die Gussform oder Schalung entfernt und der Negativabdruck aus abbaubaren Material durch Beaufschlagung mit einer heissen Flüssigkeit oder mit heissem Dampf aufgelöst. Besonders bevorzugt wird die Negativform durch heisses Wasser oder durch Wasserdampf aufgelöst.

Dadurch lassen sich ohne grossen Aufwand komplexe dreidimensionale Formen z. B. in eine Betonwand einbringen. Insbesondere das Einbringen von hinterschnittenen Nuten in eine Betonwand wird durch das erfindungsgemässe Verfahren wesentlich vereinfacht. Um den gesamten Negativabdruck aus abbaubarem Material zu entfernen, kann der Negativabdruck mit der heissen Flüssigkeit unter erhöhtem Druck beaufschlagt werden.

Ein weiterer Aspekt der vorliegenden Erfindung betrifft ein Verfahren zur Herstellung des erfindungsgemässen abbaubaren Materials. In einem ersten Schritt wird eine Binderkomponente durch Mischen des Proteinklebers mit dem Wasser hergestellt. Danach werden die Naturfasern sowie die allfällig vorhandene Additivkomponente mit der Binderkomponente in einem Rührwerk vermischt. Als Rührwerk wird vorzugsweise ein Planetenrührwerk verwendet. Alternativ kann auch ein anderes Rührwerk, wie z. B. ein Compounder verwendet werden. Schliesslich erfolgt das Einmischen des hygroskopischen Minerals.

Die in der Additivkomponente vorhandenen Stoffe lassen sich einzeln nacheinander in das Material einmischen. Alternativ können jedoch auch zunächst alle Stoffe der Additivkomponente vermischt werden, wobei diese Mischung anschliessend der Binderkomponente und den Naturfasern beigegeben wird.

Bevorzugt werden zur Herstellung des Bindemittels der Proteinkleber und das Wasser vor oder während des Mischens auf eine Temperatur von 60°C bis 80°C, bevorzugt von 65°C bis 70°C erwärmt. Durch das Erwärmen wird der Proteinkleber flüssig und lässt sich mit dem Wasser vermischen.

Vorzugsweise wird vor dem Einmischen des hygroskopischen Minerals die erhaltene Mischung getrocknet und zu Pulver verarbeitet. Durch Zumischen des hygroskopischen Minerals wird ein Zwischenprodukt erhalten. Erst unmittelbar vor der Verwendung des Materials wird eine Menge an Wasser, die 25 bis 200 Gewichtsprozent der zur Herstellung der Binderkomponente verwendeten Menge entspricht, dem Zwischenprodukt beigemischt.

Dieses Verfahren eignet sich besonders gut zur Herstellung des erfindungsgemässen abbaubaren Materials zur Verwendung in einem dreidimensionalen Drucker, der nach dem Multi-Jet Modeling Verfahren arbeitet. Dabei wird das Pulver im Drucker mit dem Wasser vermischt und auf eine geeignete Unterlage appliziert. Durch dieses Verfahren lässt sich auch im grossen Massstab ein pulverförmiges Zwischenprodukt herstellen, welches dann in Portionen mit definierten Mengen verpackt und gelagert werden kann. Erst unmittelbar vor dem Verarbeiten des Materials zu einem Formteil wird das pulverförmige Zwischenprodukt mit einer geeigneten Menge an Wasser vermischt. Bei einer Portionierung des Zwischenprodukts muss die Wassermenge entsprechend der Portionengrösse angepasst werden. Durch die Variation der zuzugebenden Wassermenge kann zudem die Viskosität und Konsistenz des Materials variiert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung eines Herstellungsverfahrens des erfindungsgemässen abbaubaren Materials; und
- Fig. 2: eine schematische Darstellung eines alternativen Herstellungsverfahrens.

Grundsätzlich sind in den Figuren gleiche Teile mit gleichen Bezugszeichen versehen.

### Wege zur Ausführung der Erfindung

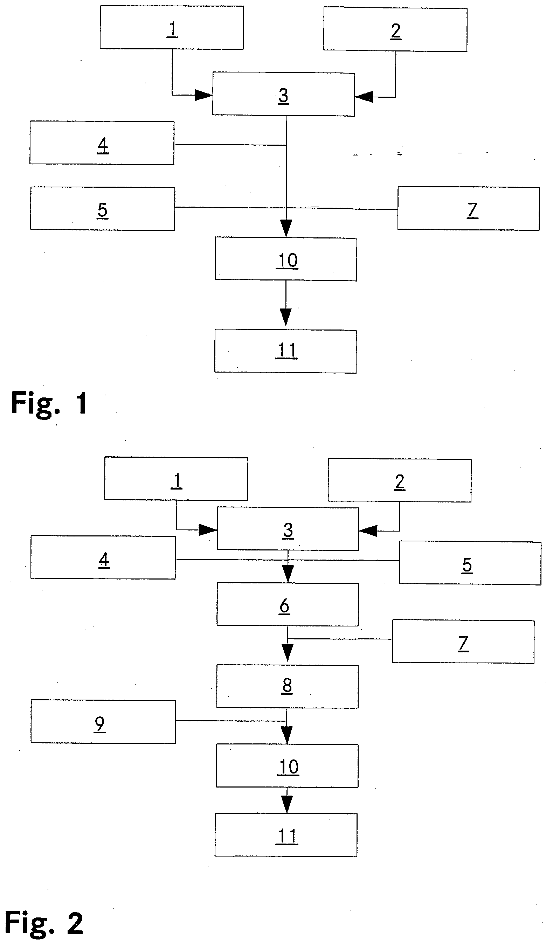

Die Figur 1 zeigt eine schematische Darstellung eines Herstellungsverfahrens für ein erfindungsgemässes Material 10. Zunächst wird der Proteinkleber 1 mit dem Wasser 2 unter Erwärmen auf 65°C bis 70°C in einem Planetenrührwerk zur Binderkomponente 3 vermischt. Unter weiterem Rühren werden zunächst die Naturfasern 4 zur Binderkomponente 3 gegeben. Anschliessend erfolgt das Einmischen der Additivkomponente sowie des hygroskopischen Minerals 7 in Form eines Pulvers. Die in der Additivkomponente 5 eingesetzten Stoffe können einzeln nacheinander dem Material zugegeben werden oder auch zunächst alle miteinander vermischt und anschliessend die daraus erhaltene Mischung dem Material zugegeben werden. Das so erhaltene abbaubare Material 10 kann anschliessend im Verarbeitungsschritt 11 durch Pressen, Extrusion, Blasformen, Rotationsformen, Giessen, Spritzgiessen oder Vakuumformen zu einem Formteil verarbeitet werden.

Die Figur 2 zeigt ein weiteres, alternatives Herstellungsverfahren für das abbaubare Material 10 als schematische Übersicht. Der Proteinkleber 1 sowie das Wasser 2 werden zur Binderkomponente 3 in einem Planetenrührwerk unter Erwärmen auf 65°C bis 70°C zusammengemischt. Die Naturfasern 4 sowie die Additivkomponente 5 werden beigemengt. In einem anschliessenden Trocknungs- und Pulverisierungsschritt 6 wird die Mischung eingetrocknet und auf eine Partikelgrösse von ca. 0.05 mm verarbeitet. Die Pulverisierung erfolgt bevorzugt in einem Mahlwerk. Das hygroskopische Mineral wird dem Pulver beigemischt. Das so erhaltene Zwischenprodukt 8 kann über längere Zeit eingelagert werden. Es ist auch möglich, dass das Zwischenprodukt 8 für eine spätere Verwendung portioniert und abgepackt wird. Kurz vor der Anwendung wird dem Zwischenprodukt 8 eine Menge an Wasser 9 beigegeben, die 25 bis 200 Gewichtsprozent der bei der Herstellung der Binderkomponente verwendeten Menge an Wasser 2 entspricht. Das so erhaltene abbaubare Material 10 kann in einem anschliessenden Verarbeitungsschritt 11 zu einem Formteil verarbeitet werden, beispielsweise durch einen dreidimensionalen Drucker.

### Beispiel 1

In einem ersten Beispiel wurden 30 g Wasser mit 38 g Hasenleim kalt gemischt und anschliessend im Wasserbad auf 65°C erwärmt. Dieser Binderkomponente wurden 17 g an Nadelholzfasern mit Längen von 0.3 mm bis 1 mm sowie 7 g Glycerin beigemischt. Die Mischung wurde in den hinteren Trichter einer Extenderschneckenpumpe eingefüllt und 8 g Gipspulver wurde durch den vorderen Trichter kontinuierlich der geförderten Mischung zugegeben. Das Material wurde bei einem Druck von ca. 6 bar durch eine Düse mit einem Durchmesser von 2 mm zu einem Strang extrudiert. Das extrudierte Material kann anschliessend weiter verarbeitet werden, z. B. durch Pressen. Alternativ können durch Extrusion durch eine geeignete Düse auch längliche Formteile mit verschiedenen Querschnitten hergestellt werden, welche vor oder nach dem Aushärten durch ein Messer oder durch eine Säge auf eine gewünschte Länge geschnitten werden können.

### Beispiel 2

In einem zweiten Beispiel wurden 36 g Hasenleim in 28 g kochendes Wasser eingerührt, um die Binderkomponente herzustellen. Der Binderkomponente wurden 7 g Glycerin zugegeben. 15 g Nadelholzfasern mit Längen von 0.7 mm bis 3.5 mm, 0.6 g eines Eisenoxidpulvers als Färbemittel sowie 7.4 g Gipspulver wurden der Binderkomponente zugegeben und das erhaltene Material mit einem Planetenrührwerk gut durchmischt. Kurz vor der Anwendung des Materials wurden 5 g Leinölfirnis zugegeben. Das Material wurde anschliessend in eine Form gegossen und mit einem Druck von 2 kg/cm² für 20 Minuten kalt zu einem Formteil gepresst.

### Beispiel 3

In einem dritten Beispiel wurden 26 g Wasser mit 33 g Hasenleim vermischt, für 30 Minuten stehen gelassen und anschliessend in einem Wasserbad auf 70°C erwärmt, um die Binderkomponente herzustellen. Anschliessend wurden 33 g Nussschalengranulat beigemengt und in einem Planetenrührwerk kräftig gemischt. Die erhaltene Masse wurde getrocknet und im Anschluss zu einem Pulver mit einer durchschnittlichen Partikelgrösse von ca. 0.05 mm in einem Mahlwerk zerkleinert. Durch Einmischen von 8 g an Gipspulver wurde ein lagerfähiges Zwischenprodukt erhalten. Das Zwischenprodukt wurde anschliessend als Substrat in einen dreidimensionalen Drucker (ZPrinter © 150 der Firma 3DSystems), der nach dem Multi-Jet Modeling Verfahren arbeitet, eingefüllt, wobei 26 g Wasser als Binder verwendet wurden.

### Beispiel 4

Ein abbaubares Material mit erhöhter Wasserbeständigkeit liess sich mit folgendem, vierten Beispiel erhalten:
Für die Binderkomponente wurden 21 g Glutinleim mit 21 g Wasser kalt gemischt und anschliessend im Wasserbad auf 65° C - 70° C erwärmt. Danach wurden 2 g Alaun dem Bindemittel zugegeben. Als Zuschlagstoff wurden 10 g an Naturholzfasern mit einer Längenverteilung von 0.7 mm bis 1.2 mm zugegeben. Im Vergleich zu den in den Beispielen 1 bis 3 hergestellten Materialien wies das Material eine erhöhte Wasserbeständigkeit auf.

### Beispiel 5

In einem fünften Beispiel wurden 21 g Glutinleim mit 21 g Wasser kalt gemischt und anschliessend im Wasserbad auf 65°C - 70° C erwärmt. Danach wurden 3 g Damar in Ethanol pastös gelöst zugegeben und die Lösung vermischt. Als Zuschlagstoff wurden 10 g Naturholzfasern mit einer Längenverteilung von 0.7 mm bis 1.2 mm zugegeben. Im Vergleich zu den in den Beispielen 1 bis 3 hergestellten Materialien wies das Material eine erhöhte Wasserbeständigkeit auf.

### Beispiel 6

In einem sechsten Beispiel wurden 21 g Glutinleim mit 21 g Wasser kalt gemischt und anschliessend im Wasserbad auf 65°C - 70° C erwärmt. Als Zuschlagstoff wurden 10 g Naturholzfasern mit einer Längenverteilung von 0.7 mm bis 1.2 mm zugegeben. Anschliessend wurden der Lösung 8 g Silizimdioxid zugegeben. Im Vergleich zu den in den Beispielen 1 bis 5 hergestellten Materialien wies das Material eine schnellere Aushärtezeit auf.

### Beispiel 7

In einem siebten Beispiel wurden 21 g Glutinleim mit 21 g Wasser kalt gemischt und anschliessend im Wasserbad auf 65°C - 70° C erwärmt. Als Zuschlagstoff wurden 10 g Naturholzfasern mit einer Längenverteilung von 0.7 mm bis 1.2 mm zugegeben. Darauf wurde der Mischung 5 g Perlit als mineralischer Füllstoff zugegeben. Im Vergleich zu den in den Beispielen 1 bis 6 hergestellten Materialien wies das Material ein verbessertes Schrumpfverhalten auf.

## Patentansprüche

1. Abbaubares Material aus biologischen Komponenten, umfassend von 10 bis 60 Gewichtsprozent eines Proteinklebers (1) aus wenigstens einem Protein, von 2 bis 50 Gewichtsprozent Naturfasern (4), von 2 bis 15 Gewichtsprozent mindestens einer hygroskopischen Minerals (7), von 10 bis 55 Gewichtsprozent Wasser (2) sowie von 0 bis 50 Gewichtsprozent einer Additivkomponente (5), **dadurch gekennzeichnet, dass** als hygroskopisches Mineral (7) Calciumsulfat, Calciumoxid, Magnesiumsulfat, Zeolith oder eine Mischung davon, vorzugsweise in Form eines Pulvers, verwendet wird.

2. Abbaubares Material nach Anspruch 1, **dadurch gekennzeichnet, dass** der Proteinkleber (1) Glutin, Kollagen, Alginate, Albumin, Gelatine, Chondrin, Agar-Agar, Xanthan oder eine Mischung davon beinhaltet.

3. Abbaubares Material nach einem der Ansprüche 1 oder 2, **dadurch gekennzeichnet, dass** die Naturfasern (4) Holzfasern, Getreidefasern, Nussschalenfasern, Gräserfasern, Maisschrot, Cellulosefasern, Celluloseflocken oder eine Mischung davon beinhalten, besonders bevorzugt Nadelholzfasern.

4. Abbaubares Material nach einem der Ansprüche 1 bis 3, **dadurch gekennzeichnet, dass** die Additivkomponente (5) von 1 bis 10 Gewichtsprozent, bevorzugt von 2 bis 8 Gewichtsprozent, mindestens eines biologisch abbaubaren Weichmachers, vorzugsweise Glycerin, Harnstoff, Zitronensäuretriethylester, Sorbit, Xanthan oder ein Alkylcitrat, umfasst.

5. Abbaubares Material nach einem der Ansprüche 1 bis 4, **dadurch gekennzeichnet, dass** die Additivkomponente (5) von 0.1 bis 10 Gewichtsprozent, bevorzugt von 3 bis 6 Gewichtsprozent, mindestens eines biologisch abbaubaren Stabilisators beinhaltet, bevorzugt Ligninsulfonat, Leinsamenöl oder Leinölfirnis.

6. Abbaubares Material nach einem der Ansprüche 1 bis 5, **dadurch gekennzeichnet, dass** die Additivkomponente (5) von 0.1 bis 10 Gewichtsprozent mindestens eines Mittels zur Erhöhung der Wasserbeständigkeit, bevorzugt Tannin, Corilagin, Kalialaun, Ganidin, Harnstoff, Kasein, Ferulasäure, Gossypol, ein Enzym wie Lysyloxidase, Transglutaminase, Laccaseoder eine Mischung davon, beinhaltet.

7. Abbaubares Material nach einem der Ansprüche 1 bis 6, **dadurch gekennzeichnet, dass** die Additivkomponente (5) von 0.1 bis 10 Gewichtsprozent wenigstens einer hydrophoben Komponente, insbesondere Gummi Arabicum, Mastix, Kolophonium, Sandarak oder eine Mischung davon umfasst.

8. Abbaubares Material nach einem der Ansprüche 1 bis 7, **dadurch gekennzeichnet, dass** die Additivkomponente mindestens ein Biopolymer umfasst, vorzugsweise Lignin, Chitin, Polycaprolacton, thermoplastische Stärke, Celloloseacetat, Polymilchsäure, Casein, Polyhydroxybuttersäure, Polyhydroxyalkanoat, Cellulosehydrat, Celluloseacetat, Celluloseacetobutyrat, Dextrose, Dextrin oder eine Mischung davon.

9. Abbaubares Material nach einem der Ansprüche 1 bis 8, **dadurch gekennzeichnet, dass** die Additivkomponente einen mineralischen Füllstoff umfasst, insbesondere Wollastonit, Talkum, Magnesiumoxid oder eine Mischung davon.

10. Verfahren zur Herstellung mindestens eines Formteils, umfassend die Schritte:
a) Vorlegen eines abbaubaren Materials nach einem der Ansprüche 1 bis 9 in flüssiger Form;
b) Herstellung mindestens eines Formteils durch Pressen, Extrusion, Blasformen, Rotationsformen, Giessen, Spritzgiessen, Vakuumformen oder durch dreidimensionales Drucken des abbaubaren Materials;
c) Aushärtung des Formteils.

11. Verfahren nach Anspruch 10, **dadurch gekennzeichnet, dass** das Material während oder nach der Aushärtung des Formteils zusätzlich mit UV-Licht, insbesondere mit einer Wellenlänge von 200 nm bis 280 nm, bevorzugt von 253 nm bestrahlt wird.

12. Verfahren nach einem der Ansprüche 10 oder 11, **dadurch gekennzeichnet, dass** das Material nach dem Aushärten zusätzlich getrocknet wird bis das ausgehärtete Material einen Wassergehalt von weniger als 1 Gewichtsprozent, insbesondere weniger als 0.2 Gewichtsprozent aufweist.

13. Verfahren zum Einbringen einer dreidimensionalen Form in eine Giessmasse, vorzugsweise in Beton, umfassend die Schritte:
a) Aufbringen eines Negativabdrucks der dreidimensionalen Form aus dem abbaubaren Material (10) nach einem der Ansprüche 1 bis 9 auf eine Innenwand einer Gussform oder Schalung;
b) Giessen der Giessmasse in die Gussform oder Schalung und Aushärten der Giessmasse;
c) Entfernung der Gussform oder der Schalung; und
d) Auflösen des Negativabdrucks aus dem abbaubaren Material (10) durch Beaufschlagung mit heissem Wasser oder mit Wasserdampf.

14. Verfahren zur Herstellung eines abbaubaren Materials nach einem der Ansprüche 1 bis 9, umfassend die Schritte:
a) Herstellung einer Binderkomponente (3) durch Mischen des Proteinklebers (1) mit dem Wasser (2);
b) Mischen der Naturfasern (4) sowie der Additivkomponente (5) mit der Binderkomponente (3) in einem Rührwerk, vorzugsweise einem Planetenrührwerk; und
c) Einmischen des hygroskopischen Minerals (7),

15. Verfahren nach Anspruch 14, **dadurch gekennzeichnet, dass** vor dem Einmischen des hygroskopischen Minerals (7) die erhaltene Mischung getrocknet und zu Pulver verarbeitet wird, wobei durch Zugabe des hygroskopischen Minerals (7) ein Zwischenprodukt (8) erhalten wird, dem erst unmittelbar vor der Verwendung eine Menge an Wasser (9), die 25 bis 200 Gewichtsprozent der zur Herstellung der Binderkomponente verwendeten Menge an Wasser (2) entspricht, beigemischt wird.

## Claims

1. A degradable material made of biological components, comprising from 10 to 60 percent by weight of a protein glue (1) made of at least one protein, from 2 to 50 percent by weight of natural fibers (4), from 2 to 15 percent by weight of at least one hygroscopic mineral (7), from 10 to 55 percent by weight of water (2) and also from 0 to 50 percent by weight of an additive component (5), **characterized in that** as hygroscopic mineral (7), calcium sulfate, calcium oxide, magnesium sulfate, zeolite or a mixture thereof is used, preferably in the form of a powder.

2. The degradable material as claimed in claim 1, **characterized in that** the protein glue (1) contains glutin, collagen, alginates, albumin, gelatin, chondrin, agar-agar, xanthan, or a mixture thereof.

3. The degradable material as claimed in either of claims 1 and 2, **characterized in that** the natural fibers (4) comprise wood fibers, cereal fibers, nutshell fibers, grass fibers, cornmeal, cellulose fibers, cellulose flakes or a mixture thereof, particularly preferably softwood fibers.

4. The degradable material as claimed in any one of claims 1 to 3, **characterized in that** the additive component (5) comprises from 1 to 10 percent by weight, preferably from 2 to 8 percent by weight, of at least one biodegradable plasticizer, preferably glycerol, urea, triethyl citrate, sorbitol, xanthan, or an alkyl citrate.

5. The degradable material as claimed in any one of claims 1 to 4, **characterized in that** the additive component (5) contains from 0.1 to 10 percent by weight, preferably from 3 to 6 percent by weight, of at least one biodegradable stabilizer, preferably lignin sulfonate, linseed oil, or linseed oil varnish.

6. The degradable material as claimed in any one of claims 1 to 5, **characterized in that** the additive component (5) contains from 0.1 to 10 percent by weight of at least one means for increasing the water resistance, preferably tannin, corilagin, potash alum, Ganidin, urea, casein, ferulic acid, gossypol, an enzyme such as lysyl oxidase, transglutaminase, laccase or a mixture thereof.

7. The degradable material as claimed in any one of claims 1 to 6, **characterized in that** the additive component (5) comprises from 0.1 to 10 percent by weight of at least one hydrophobic component, in particular gum arabic, mastic, colophony, sandarac or a mixture thereof.

8. The degradable material as claimed in any one of claims 1 to 7, **characterized in that** the additive component comprises at least one biopolymer, preferably lignin, chitin, polycaprolactone, thermoplastic starch, cellulose acetate, polylactic acid, casein, polyhydroxybutyric acid, polyhydroxyalkanoate, cellulose hydrate, cellulose acetate, cellulose acetobutyrate, dextrose, dextrin, or a mixture thereof.

9. The degradable material as claimed in any one of claims 1 to 8, **characterized in that** the additive component comprises a mineral filler, in particular wollastonite, talc, magnesium oxide, or a mixture thereof.

10. A method for producing at least one molded part, which comprises the steps:
a) introducing a degradable material as claimed in any one of claims 1 to 9 in liquid form;
b) producing at least one molded part by pressing, extrusion, blow-molding, rotary molding, casting, injection molding, vacuum molding or by three-dimensional printing of the degradable material;
c) curing the molded part.

11. The method as claimed in claim 10, **characterized in that** the material, during or after the curing of the molded part, is additionally irradiated with UV light, in particular having a wavelength of 200 nm to 280 nm, preferably of 253 nm.

12. The method as claimed in either of claims 10 and 11, **characterized in that** the material, after the curing, is additionally dried until the cured material has a water content of less than 1 percent by weight, in particular less than 0.2 percent by weight.

13. A method for introducing a three-dimensional shape into a casting composition, preferably into concrete, comprising the steps:
a) applying a negative copy of the three-dimensional shape made of the degradable material (10) as claimed in any one of claims 1 to 9 to an inner wall of a casting mold or shell;
b) casting the casting composition into the casting mold or shell and curing the casting composition;
c) removing the casting mold or the shell; and
d) disintegrating the negative copy made of the degradable material (10) by charging with hot water or with steam.

14. A method for producing a degradable material as claimed in any one of claims 1 to 9, which comprises the steps:
a) producing a binder component (3) by mixing the protein glue (1) with the water (2);
b) mixing the natural fibers (4) and the additive component (5) with the binder component (3) in an agitator, preferably a planetary agitator; and
c) adding the hygroscopic mineral (7).

15. The method as claimed in claim 14, **characterized in that**, before addition of the hygroscopic mineral (7), the mixture obtained is dried and processed to form powder, wherein by adding the hygroscopic mineral (7), an intermediate product (8) is obtained, to which an amount of water (9) which corresponds to 25 to 200 percent by weight of the amount of water (2) used for producing the binder component is added, not until immediately before use.

## Revendications

1. Matériau dégradable constitué de composants biologiques, comprenant 10 à 60% en poids d'une colle protéinique (1), constituée par au moins une protéine, 2 à 50% en poids de fibres naturelles (4), 2 à 15% en poids d'au moins un minéral hygroscopique (7), 10 à 55% en poids d'eau (2) ainsi que 0 à 50% en poids d'un composant additif (5), **caractérisé en ce qu'**on utilise, comme minéral hygroscopique (7), du sulfate de calcium, de l'oxyde de calcium, du sulfate de magnésium, une zéolithe ou un mélange de ceux-ci, de préférence sous forme d'une poudre.

2. Matériau dégradable selon la revendication 1, **caractérisé en ce que** la colle protéinique (1) contient de la glutine, du collagène, un alginate, de l'albumine, de la gélatine, de la chondrine, de l'agaragar, du xanthane ou un mélange de ceux-ci.

3. Matériau dégradable selon l'une quelconque des revendications 1 ou 2, **caractérisé en ce que** les fibres naturelles (4) sont des fibres de bois, des fibres de céréales, des fibres de coquille de noix, des fibres de graminées, du maïs égrugé, des fibres de cellulose, des flocons de cellulose ou un mélange de ceux-ci, de marnière particulièrement préférée des fibres de bois résineux.

4. Matériau dégradable selon l'une quelconque des revendications 1 à 3, **caractérisé en ce que** le composant additif (5) contient 1 à 10% en poids, de préférence 2 à 8% en poids, d'au moins un plastifiant biodégradable, de préférence le glycérol, l'urée, l'ester triéthylique de l'acide citrique, le sorbitol, le xanthane ou un citrate d'alkyle.

5. Matériau dégradable selon l'une quelconque des revendications 1 à 4, **caractérisé en ce que** le composant additif (5) contient 0,1 à 10% en poids, de préférence 3 à 6% en poids, d'au moins un stabilisant biodégradable, de préférence le sulfonate de lignine, l'huile de graines de lin ou le vernis d'huile de lin.

6. Matériau dégradable selon l'une quelconque des revendications 1 à 5, **caractérisé en ce que** le composant additif (5) contient 0,1 à 10% en poids d'au moins un agent pour augmenter la résistance à l'eau, de préférence le tannin, la corilagine, l'alun de potassium, la ganidine, l'urée, la caséine, l'acide férulique, le gossypol, une enzyme telle que la lysyloxydase, une transglutaminase, une laccase ou un mélange de ceux-ci.

7. Matériau dégradable selon l'une quelconque des revendications 1 à 6, **caractérisé en ce que** le composant additif (5) comprend 0,1 à 10% en poids d'au moins un composant hydrophobe, en particulier la gomme arabique, le Mastix, le colophonium, la gomme sandaraque ou un mélange de ceux-ci.

8. Matériau dégradable selon l'une quelconque des revendications 1 à 7, **caractérisé en ce que** le composant additif comprend au moins un biopolymère, de préférence la lignine, la chitine, une polycaprolactone, un amidon thermoplastique, l'acétate de cellulose, un poly(acide lactique), la caséine, un poly(acide hydroxybutyrique), un polyhydroxyalcanoate, la cellulose hydratée, l'acétate de cellulose, l'acétobutyrate de cellulose, le dextrose, la dextrine ou un mélange de ceux-ci.

9. Matériau dégradable selon l'une quelconque des revendications 1 à 8, **caractérisé en ce que** le composant additif comprend une charge minérale, en particulier la wollastonite, le talc, l'oxyde de magnésium ou un mélange de ceux-ci.

10. Procédé pour la préparation d'au moins une pièce façonnée, comprenant les étapes suivantes, consistant à :
a) disposer au préalable un matériau dégradable selon l'une quelconque des revendications 1 à 9 sous forme liquide ;
b) préparer au moins une pièce façonnée par compression, extrusion, moulage par soufflage, moulage par rotation, coulage, moulage par injection, moulage sous vide ou par impression tridimensionnelle du matériau dégradable ;
c) durcir la pièce façonnée.

11. Procédé selon la revendication 10, **caractérisé en ce que** le matériau est irradié, pendant ou après le durcissement de la pièce façonnée, en plus par une lumière UV, présentant en particulier une longueur d'onde de 200 nm à 280 nm, de préférence de 253 nm.

12. Procédé selon l'une quelconque des revendications 10 ou 11, **caractérisé en ce que** le matériau, après le durcissement, est en outre séché jusqu'à ce que le matériau durci présente une teneur en eau inférieure à 1% en poids, en particulier inférieure à 0,2% en poids.

13. Procédé pour introduire une forme tridimensionnelle dans une masse coulée, de préférence dans du béton, comprenant les étapes consistant à :
a) appliquer une empreinte négative de la forme tridimensionnelle en matériau dégradable (10) selon l'une quelconque des revendications 1 à 9 sur la paroi interne d'un moule de coulée ou d'un coffrage ;
b) couler la masse coulée dans le moule de coulée ou le coffrage et durcir la masse coulée ;
c) éliminer le moule de coulée ou le coffrage ; et
d) dissoudre l'empreinte négative en matériau dégradable (10) par traitement à l'eau chaude ou à la vapeur d'eau.

14. Procédé pour la production d'un matériau dégradable selon l'une quelconque des revendications 1 à 9, comprenant les étapes consistant à :
a) préparer un composant de liant (3) par mélange de la colle protéinique (1) avec de l'eau (2) ;
b) mélanger les fibres naturelles (4) ainsi que le composant additif (5) avec le composant de liant (3) dans un agitateur, de préférence un agitateur planétaire , et
c) incorporer le minéral hygroscopique (7).

15. Procédé selon la revendication 14, **caractérisé en ce que** le mélange obtenu est séché et transformé en poudre avant l'incorporation du minéral hygroscopique (7), un produit intermédiaire (8) étant obtenu par addition du minéral hygroscopique (7), qui n'est mélangé que juste avant l'utilisation avec une quantité d'eau (9) qui correspond à 25 jusqu'à 200% en poids de la quantité d'eau (2) utilisée pour la préparation du composant de liant.
